Europäisches Patentamt

European Patent Office

Office européen des brevets

(11) Veröffentlichungsnummer: **0 518 162 A2**

# EUROPÄISCHE PATENTANMELDUNG

(21) Anmeldenummer: **92109226.8**

(51) Int. Cl.5: **B60K 28/04**

(22) Anmeldetag: **02.06.92**

(30) Priorität: **14.06.91 US 715168**

(43) Veröffentlichungstag der Anmeldung:
**16.12.92 Patentblatt 92/51**

(84) Benannte Vertragsstaaten:
**DE ES FR GB IT SE**

(71) Anmelder: **DEERE & COMPANY**
**1 John Deere Road**
**Moline, Illinois 61265(US)**

(72) Erfinder: **Wasson, Steven Charles**
**4422 W. Wackerly**
**Midland, Michigan 48667(US)**

Erfinder: **Daniel, David Robert**
**4601 Oakridge Drive**
**Midland, Michigan 48640(US)**
Erfinder: **Teal, Richard Donald**
**510 S. Ridge Circle**
**Horicon, Wisconsin 53032(US)**
Erfinder: **Hutchison, Wayne Robert**
**N7840 Hwy. TW.**
**Mayville, Wisconsin 53050(US)**

(74) Vertreter: **Feldmann, Bernhard et al**
**DEERE & COMPANY European Office Patent**
**Department Steubenstrasse 36-42**
**W-6800 Mannheim 1(DE)**

(54) **Sicherheitsschalteranordnung für ein Fahrzeug.**

(57) Bei einer Sicherheitsschalteranordnung (16) für ein mit einem Fahrersitz (12) ausgerüstetes Fahrzeug mit einem ein- und ausschaltbaren Schalter (24), der im ausgeschalteten Zustand eine Fahrzeugfunktion unterbindet und unter dem Gewicht einer sich auf dem Fahrersitz (12) befindlichen Person einschaltbar ist und im eingeschalteten Zustand diese Fahrzeugfunktion zuläßt, ist unterhalb der Sitzfläche in den Sitz (12) eine ausbiegbare Schalterklappe (28) integriert, die durch das Gewicht der auf dem Sitz (12) sitzenden Bedienungsperson ausgebogen wird und im Bereich des Schalters (24) angeordnet ist.

*Fig. 2*

Die Erfindung bezieht sich auf eine Sicherheitsschalteranordnung für ein mit einem Fahrersitz ausgerüstetes Fahrzeug mit einem ein- und ausschaltbaren Schalter, der im ausgeschalteten Zustand eine Fahrzeugfunktion unterbindet und unter dem Gewicht einer sich auf dem Fahrersitz befindlichen Person einschaltbar ist und im eingeschalteten Zustand diese Fahrzeugfunktion zuläßt.

Derartige Sicherheitsschalteranordnungen werden in der Regel dazu eingesetzt, um einen Fahrzeugmotor und andere Aggregate, die von dem Fahrzeugmotor aus angetrieben werden, sofort und selbsttätig auszuschalten, wenn der Fahrer das Fahrzeug verläßt.

Dies ist auch der Fall bei der Sicherheitsschalteranordnung (US-A-4 198 092), von der die Erfindung ausgeht. Hier ist der Schalter auf dem Fahrzeugrahmen unterhalb eines Sitzes angeordnet, der mit dem Sitzgestell über ein Scharnier verbunden ist und über eine Federanordnung in einer leicht angehobenen Stellung gehalten wird. Befindet sich dann ein Fahrer auf dem Sitz, so wird die Federanordnung zusammengedrückt und der Schalter eingerückt. Verläßt der Fahrer den Sitz, so wird die Federanordnung den Sitz wieder nach oben schieben, wobei sich der Schalter ausschaltet. Solche Schalter sind immer in einen Stromkreis eingebunden und, um den Schalter einrücken zu können, muß er so angeordnet sein, daß der Sitz keinen großen Verstellweg benötigt. Der Schalter muß daher entsprechend hoch gesetzt werden, jedoch mit einem Freiraum, daß er bei einer starken Durchfederung nicht beschädigt wird. In jedem Fall sind besondere und aufwendige Maßnahmen zu treffen.

In einem Sitz vorgesehene Schalter sind ebenfalls bekannt (US-A-4 795 865). Sie weisen allerdings viele Einzelteile auf.

Die mit der Erfindung zu lösende Aufgabe wird in einem ersten Aspekt darin gesehen, die Betätigung für einen Schalter in einer Sicherheitsschalteranordnung einfacher zu gestalten, und in einem weiteren Aspekt darin, den Schalter in den Sitz miteinzubauen. Der erste Aspekt ist dadurch gelöst, daß unterhalb der Sitzfläche in den Sitz eine ausbiegbare Schalterklappe integriert ist, die durch das Gewicht der auf dem Sitz sitzenden Bedienungsperson ausgebogen wird und im Bereich des Schalters angeordnet ist. Hierdurch ist eine einfache Betätigung geschaffen, die Bestandteil des Sitzes ist.

Zweckmäßig kann der Schalter einen Stößelteil aufweisen, der beim Ausbiegen der Schalterklappe nach unten herabgedrückt wird und den Schalter einschaltet.

Die Schalterklappe kann in einfacher Weise dadurch ausbiegbar gestaltet werden, daß in den Sitz ein Biegeteil integriert ist, der anderenends in die Schalterklappe integriert ist. Der Biegeteil bildet damit den Steg, der die Schalterklappe mit dem Sitz verbindet.

Die einstückige Bauweise läßt sich in besonders einfacher Weise nach einem weiteren Vorschlag der Erfindung dadurch erreichen, daß der Sitz eine erste aus Kunststoff bestehende Sitzschale aufweist, in die die ebenfalls aus Kunststoff bestehende Schalterklappe integriert ist.

Der zweite Aspekt der Aufgabe kann dadurch gelöst werden, daß unterhalb der ersten Sitzschale eine mit dieser verbundene zweite Sitzschale vorgesehen ist, die den Schalter aufnimmt.

Die Schalterklappe erhält einen ausreichenden Schwenkbereich, wenn der Biegeteil sich von einem vorderen Teil der Schalterklappe aus nach vorne erstreckend ausgebildet ist und mit seinem vorderen Ende in die erste Sitzschale übergeht.

Ein schnelles Zurückschnellen der Schalterklappe in ihre Ausgangsposition und eine dauerhafte Verbindung kann dann erreicht werden, wenn der Biegeteil durch Rippen verstärkt ist.

Die Fahrzeugfunktion, die über den Schalter ermöglicht oder unterbrochen werden sollte, ist bevorzugt das Laufen des Motors oder sein Abstellen. Allerdings sollte der Motor auch dann weiter laufen, wenn die Bedienungsperson ihr Gewicht zu einer Sitzseite hin oder etwa nach vorne verlagert, weshalb hierzu nach der Erfindung vorgeschlagen wird, daß die Schalterklappe eine Breite aufweist, die in etwa der Breite der Sitzfläche entspricht, und eine Länge, die etwa einem Drittel bis der Hälfte der Sitzflächenlänge entspricht.

Schließlich kann die Erfindung noch vorsehen, daß der Schalter nicht betätigt wird, wenn jemand nur auf der vorderen Kante des Sitzes sitzt, was bei Kindern der Fall ist. Für einen solchen Fall schlägt die Erfindung vor, daß die Schalterklappe im rückwärtigen horizontalen Abschnitt der ersten Sitzschale in einer entsprechenden Öffnung angeordnet ist, wobei der Biegeteil als verstärkter Steg zwischen Schalterklappe und dem vorderen Abschnitt der ersten Sitzschale ausgebildet ist.

In der Zeichnung ist ein nachfolgend näher erläutertes Ausführungsbeispiel der Erfindung dargestellt. Es zeigt:

Fig. 1    ein Fahrzeug für die Garten- und Rasenpflege in perspektivischer Darstellung,

Fig. 2    einen aus zwei Sitzschalen bestehenden Fahrersitz, wobei zwischen den beiden Rückenlehnen der Sitzschalen ein Kraftstofftank vorgesehen sein kann,

Fig. 3    den Fahrersitz in Seitenansicht und

Fig. 4    einen Schnitt nach der Linie 4 : 4 in Fig. 3.

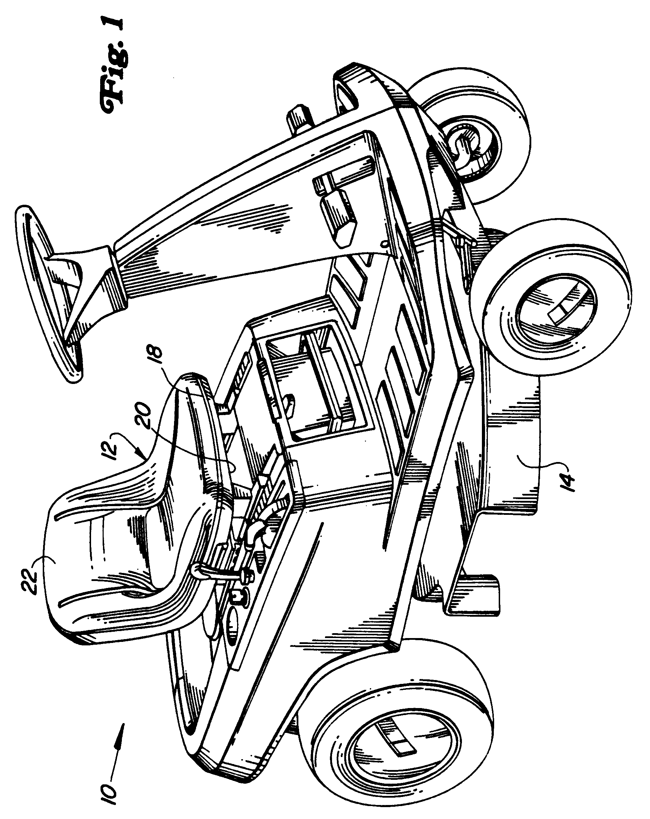

In Fig 1 der Zeichnung ist ein Fahrzeug 10 für die Garten- und Rasenpflege dargestellt. Dieses Fahrzeug ist mit einem Fahrersitz 12 und für den Rasenschnitt mit einem Mähwerk 14 ausgerüstet. Das Fahrzeug selbst wird ebenso wie das Mähwerk von einem nicht dargestellten Verbrennungsmotor oder einer anderen Kraftquelle aus angetrieben.

Solche Fahrzeuge werden nicht nur von geübten Personen betrieben, sondern auch von weniger erfahrenen Personen eingesetzt. Es ist nicht auszuschließen, daß sogar Kinder oder Jugendliche den Rasenschnitt ausführen. Aus diesem Grunde sind solche Fahrzeuge mit besonderen Sicherheitsvorkehrungen ausgerüstet. Eine davon ist eine Sicherheitsschalteranordnung 16, die nachfolgend im einzelnen beschrieben wird.

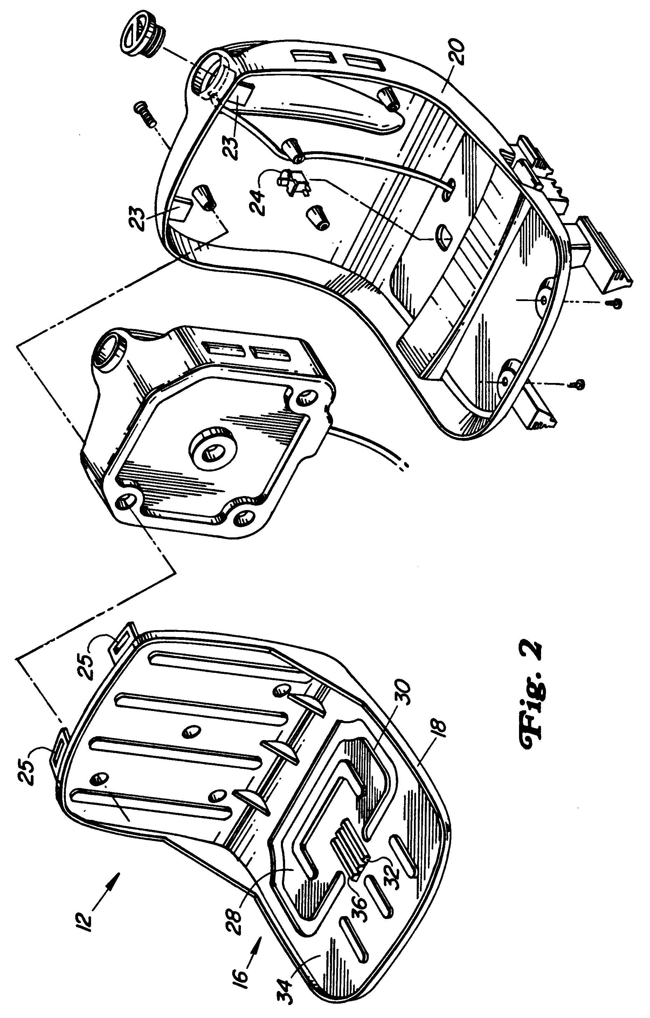

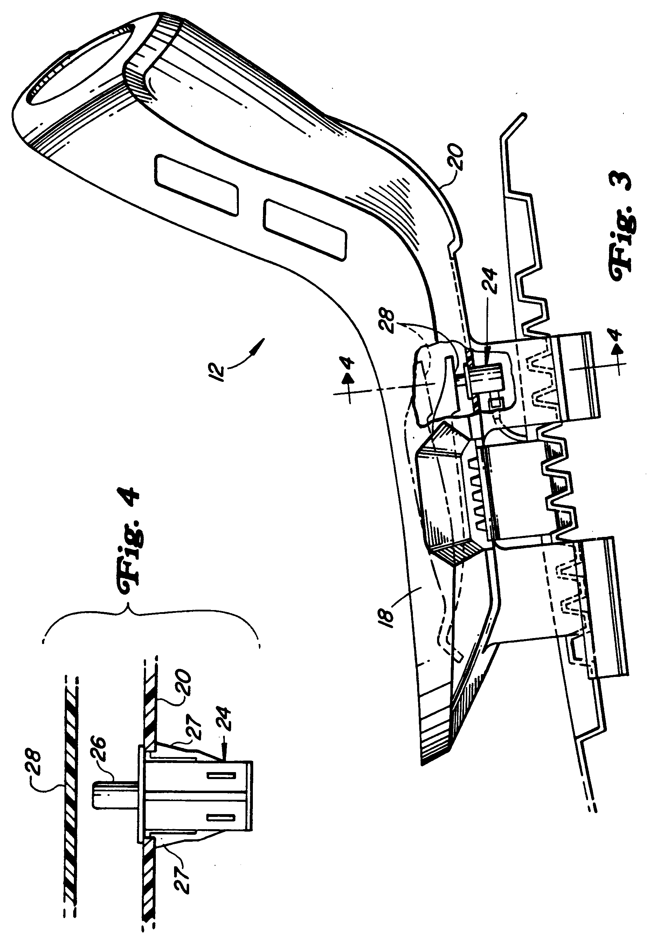

Die Sicherheitsschalteranordnung ist in den Fig. 2 bis 4 zu erkennen und in dem Fahrersitz 12 eingebaut. Sie bewirkt, daß der Fahrzeugmotor sich sofort abstellt, wenn eine Bedienungsperson den Fahrersitz verläßt. Das gesamte Fahrzeug kann in Kunststoffbauweise hergestellt sein. Im vorliegenden Fall interessiert aber nur der aus Kunststoff hergestellte Fahrersitz 12. Er besteht im einzelnen aus zwei im Spritzgußverfahren hergestellten Sitzschalen 18 und 20, die Teile der Sicherheitsschalteranordnung aufnehmen und später zusammengesetzt werden. Auf die erste Sitzschale 18 kann in der Endmontage noch eine Polsterung 22 aufgesetzt werden, damit ein Fahrer bequem und sicher sitzen kann. Im zusammengebauten Zustand befindet sich die zweite Sitzschale 20 unter und hinter der ersten Sitzschale 18 und ein Kraftstofftank, der in Fig. 2 erkennbar ist, kann noch zwischen den beiden Rückenlehnen vorgesehen sein. Eine dauerhafte Montage wird durch Eingriffsteile 23 und Schrauben an der zweiten Sitzschale 20 erreicht, die mit entsprechenden Öffnungen, wie Ösen 25 an der ersten Sitzschale 18 zu verbinden sind. Die zweite Sitzschale 20 nimmt einen Schalter 24 mit einem Stößelteil 26 auf, die Bestandteil der Sicherheitsschaltung sind. Der Schalter 24 wird in eine entsprechende Öffnung in der zweiten Sitzschale 20 eingesetzt und dort, wie aus Fig. 4 zu erkennen ist, durch ausbiegbare Flügelteile 27 gehalten, die beim Einsetzen des Schalters nach außen gebogen werden und so den Schalter in einer Art Preßsitz halten. Der Schalter 24 kann mit der Zündanlage des Verbrennungsmotors verkabelt sein und den Motor abstellen, wenn er sich ausschaltet. Denkbar ist es natürlich im Rahmen der Erfindung, daß der Schalter auf andere Komponenten eines Fahrzeuges wirkt, wie zum Beispiel auf die Kupplung für das Mähwerk 14. Der Schalter 24 ist so ausgebildet, daß er sich selbsttätig ausschaltet, wenn sich keine Bedienungsperson auf dem Fahrersitz befindet. Eingeschaltet wird er durch eine in die erste Sitzschale integrierte und ausbiegbare Schalterklappe 28, die beim Spritzgießen mitgeformt wird. Die Schalterklappe ist in einem rückwärtigen horizontalen Abschnitt 30 der ersten Sitzschale 18 beweglich vorgesehen und steht über einen frontseitigen schmaleren Steg mit dem vorderen Teil 34 des Abschnittes 30 in Verbindung. Der Steg funktioniert wie ein Biegeteil 32 und ermöglicht es der Schalterklappe, unter dem Gewicht eines Fahrers nach unten auszuschwenken. Der Steg oder Biegeteil 32 läßt die Schalterklappe wieder in ihre ursprüngliche Stellung zurückschnellen, wenn der Sitz nicht mehr mit dem Gewicht des Fahrers belastet ist. Damit der Steg diese Funktion auch dauerhaft erfüllen kann, ist er noch mit Versteifungsrippen 36 versehen, die mit dazu beitragen, daß die Schalterklappe blitzschnell in ihre Ausgangslage zurückspringt. Eine solche einstückige Ausbildung läßt sich im Gießverfahren mit einheitlichem Material leicht herstellen und wird deshalb bevorzugt. Doch kann die Schalterklappe auch anders ausgebildet werden, beispielsweise auf ihrer ganzen vorderen Breite an den vorderen Teil 34 angeschlossen werden. In einem solchen Fall ist sie dann so flexibel oder federnd auszubilden, daß sie im unbelasteten Zustand wieder in ihre Ausgangslage zurückspringt. Gegebenenfalls kann sie auch aus einem anderen Werkstoff hergestellt sein.

Die Schalterklappe sollte in jeden Fall eine Größe aufweisen und so angeordnet sein, daß der Motor weiterläuft, wenn die Bedienungsperson ihre Sitzposition von der einen zur anderen Seite des Sitzes oder nach vorne verlagert. Andererseits ist der vordere Teil 34 des horizontalen Abschnittes 30 der ersten Sitzschale 18 noch so groß, daß Kinder, die wegen ihrer kürzeren Beine in der Regel nur auf der vorderen Sitzkante sitzen können, den Schalter 24 nicht einrücken können, da ihr Gewicht dann die Schalterklappe nicht erreicht.

Bei einer sich auf dem Sitz befindlichen Person normaler Größe wird sich die Schalterklappe dann infolge des auf sie einwirkenden Gewichtes nach unten biegen, wodurch der Stößel nach unten gedrückt wird und über den Schalter 24 der Stromkreis zu der Zündanlage geschlossen wird. Das Fahrzeug kann mit seinen Aggregaten betrieben werden. Wirkt der Stromkreis auf andere Aggregate als dem Motor, so können diese betrieben werden. In einem solchen Fall kann der Motor auch ohne geschlossenen Schalter 24 angelassen werden. Es wird deshalb bevorzugt, daß der Schalter 24 in dem Stromkreis für die Zündung vorgesehen ist. Steigt eine Bedienungsperson von dem Fahrzeug ab, ohne den Motor abzustellen, so wird die Schalterklappe entlastet und springt auf Grund der ihr innewohnenden Flexibilität in ihre Ausgangslage zurück. Der Schalter 24 stellt sich dann unmittelbar auf seine Ausposition, der Zündkreis wird unterbrochen und das Fahrzeug mit allen seinen vom Motor aus angetriebenen Aggregaten abgestellt.

**Patentansprüche**

1. Sicherheitsschalteranordnung für ein mit einem Fahrersitz (12) ausgerüstetes Fahrzeug (10) mit einem ein- und ausschaltbaren Schalter (24), der im ausgeschalteten Zustand eine Fahrzeugfunktion unterbindet, unter dem Gewicht einer sich auf dem Fahrersitz (12) befindlichen Person einschaltbar ist und im eingeschalteten Zustand diese Fahrzeugfunktion zuläßt, dadurch gekennzeichnet, daß unterhalb der Sitzfläche in den Sitz (12) eine ausbiegbare Schalterklappe (28) integriert ist, die durch das Gewicht der auf dem Sitz (12) sitzenden Bedienungsperson ausgebogen wird und im Bereich des Schalters (24) angeordnet ist.

2. Sicherheitsschalteranordnung nach Anspruch 1, dadurch gekennzeichnet, daß der Schalter (24) einen Stößelteil (26) aufweist, der beim Ausbiegen der Schalterklappe (28) nach unten herabgedrückt wird und den Schalter (24) einschaltet.

3. Sicherheitsschalteranordnung nach Anspruch 1, dadurch gekennzeichnet, daß in den Sitz (12) ein Biegeteil (32) integriert ist, der anderenends in die Schalterklappe (28) integriert ist.

4. Sicherheitsschalteranordnung nach einem oder mehreren der vorherigen Ansprüche, dadurch gekennzeichnet, daß der Sitz (12) eine erste aus Kunststoff bestehende Sitzschale (18) aufweist, in die die ebenfalls aus Kunststoff bestehende Schalterklappe (28) integriert ist.

5. Sicherheitsschalteranordnung nach einem oder mehreren der vorherigen Ansprüche, dadurch gekennzeichnet, daß unterhalb der ersten Sitzschale eine mit dieser verbundene zweite Sitzschale (20) vorgesehen ist, die den Schalter (24) aufnimmt.

6. Sicherheitsschalteranordnung nach Anspruch 3, dadurch gekennzeichnet, daß der Biegeteil (32) sich von einem vorderen Teil der Schalterklappe (28) aus nach vorne erstreckend ausgebildet ist und mit seinem vorderen Ende in die erste Sitzschale (18) übergeht.

7. Sicherheitsschalteranordnung nach Anspruch 3 oder 6, dadurch gekennzeichnet, daß der Biegeteil (32) durch Rippen (36) verstärkt ist.

8. Sicherheitsschalteranordnung nach einem oder mehreren der vorherigen Ansprüche, dadurch gekennzeichnet, daß die Schalterklappe (28) eine Breite aufweist, die in etwa der Breite der Sitzfläche entspricht, und eine Länge, die etwa einem Drittel bis der Hälfte der Sitzflächenlänge entspricht.

9. Sicherheitsschalteranordnung nach Anspruch 8, dadurch gekennzeichnet, daß die Schalterklappe (28) im rückwärtigen horizontalen Abschnitt (30) der ersten Sitzschale (18) in einer entsprechenden Öffnung angeordnet ist, wobei der Biegeteil (32) als verstärkter Steg zwischen Schalterklappe (28) und dem vorderen Abschnitt (34) der ersten Sitzschale (18) ausgebildet ist.

Fig. 1

EP 0 518 162 A2

Fig. 2

Fig. 4

Fig. 3

EP 0 518 162 A2